Europäisches Patentamt

European Patent Office

Office européen des brevets

(11) Numéro de publication: **0 009 848**

**A1**

## DEMANDE DE BREVET EUROPEEN

(21) Numéro de dépôt: 79200553.0

(22) Date de dépôt: 01.10.79

(51) Int. Cl.³: **B 60 H 3/04**
**H 02 P 7/66**

(30) Priorité: 02.10.78 FR 7828126

(43) Date de publication de la demande: •
16.04.80 Bulletin 80/8

(84) Etats Contractants Désignés:
AT BE CH DE GB IT LU NL SE

(71) Demandeur: Société anonyme dite : FRIGIKING
FRANCE
B.P. 16 Franqueville Saint Pierre
F-76520 Boos(FR)

(72) Inventeur: Hertel, Bernard
B.P. 16 Franqueville Saint Pierre
F-76520 Boos(FR)

(74) Mandataire: Blain, Alfred Max
22, avenue de l'Opéra
F-75001 Paris(FR)

(54) Dispositif de commande des moteurs électriques d'équipements frigorifiques par moteur thermique.

(57) L'invention permet l'entrainement des moteurs asynchrones d'un équipement frigorifique avec limitation de l'intensité au démarrage en charge d'un alternateur commandé par moteur thermique.

Un embrayage centrifuge 7 n'assure l'embrayage de la poulie de transmission 8 que lorsque la vitesse de l'arbre 6 est suffisante pour entrainer l'alternateur 12 par 9 à une vitesse telle que la tension variable de sortie soit supérieure à une valeur donnée.

L'invention s'applique aux camions frigorifiques et autres installations frigorifiques.

EP 0 009 848 A1

L'invention se rapporte à un dispositif de commande des des moteurs électriques d'équipements frigorifiques au moyen d'un moteur thermique et notamment d'un moteur de camion équipé d'une installation frigorifique.

L'utilisation de moteurs thermiques en vue d'assurer la puissance électrique nécessaire à des moteurs électriques est connue depuis longtemps. Il est donc banal d'utiliser un moteur thermique pour entrainer un alternateur à vitesse constante ou subissant une variation de vitesse très petite de l'ordre de quelques pour cent compatible avec l'écart de tension tolérée.

Une telle solution étant rendue impossible lorsque le moteur thermique est le moteur d'entrainement d'un camion que l'on désire utiliser en cours de marche pour fournir l'énergie nécessaire à l'installation frigorifique dont il est équipé, une solution consistait à utiliser la batterie d'accumulateurs du camion lorsque celui-ci était en marche. Ceci conduisait à une surveillance constante de la batterie et ne permettait pas l'alimentation de l'installation frigorifique au cours de longues ou de fréquentes périodes de marche au ralenti à l'arrêt du camion.

L'objet de la présente invention est un dispositif de commande des moteurs électriques d'équipements frigorifiques au moyen d'un moteur thermique auxiliare et notamment au moyen d'un moteur thermique d'entrainement d'un véhicule en vue d'assurer l'énergie nécessaire à l'équipement frigorifique dont il est pourvu, aussi bien au cours de sa marche qu'au cours de ses périodes de fonctionnement au ralenti, même lorsqu'elles sont prolongées, ainsi qu'au cours du démarrage en charge le dispositif de commande étant caractérisé en ce que la génératrice électrique entrainée par le moteur thermique est un alternateur fournissant un courant alternatif, de fréquence et de tension variables, à l'ensemble des moteurs électriques de l'installation, constitués de moteurs asynchrones travaillant à puissance constante, et en ce que le dispositif est pourvu d'un moyen retardateur n'assurant le débit de l'alternateur que lors de l'obtention d'une vitesse suffisante dudit moteur thermique et capable d'engendrer au démarrage en charge une fréquence et une tension suffisante pour éliminer tout échauffement intempestif des moteurs asynchrones.

Ainsi contrairement aux installations usuelles de groupes électrogènes, la puissance transmise s'effectue sous la forme d'un courant alternatif de tension et de fréquence variables en fonc- tion de la vitesse d'entrainement du moteur du véhicule et lorsque celui-ci se situe au dessus d'un certain seuil de vitesse. Il en résulte que la tension fournie par l'alternateur est également supérieure à un seuil donné de telle sorte que pour la puissance consommée par chaque moteur asynchrone de l'installation frigorifique, destiné à entrainer par exemple un ventilateur, l'intensité du courant commandant le moteur reste au moment du démarrage inférieure à un certain seuil évitant toute détérioration des roulements des moteurs.

A titre d'exemple on peut assurer le débit de l'alternateur dès que l'arbre du moteur thermique atteint la vitesse de 600 tours par minute, cette vitesse entrainant, en raison du dispositif choisi de transmission du mouvement, une vitesse d'entrainement de l'alternateur suffisante pour fournir une tension de 114 volts à la fréquence de 15 Hz. Cette tension continue de croître jusqu'à 380 volts par exemple lorsque la vitesse de l'alternateur atteint 3.000 tours par minute la fréquence du courant fourni passant à 50 Hz. Le moyen retardateur permettant le débit de l'alternateur dès que la tension fournie est de l'ordre de 114 volts peut être de tout type : mécanique, électrique ou électronique.

Selon un mode de réalisation particulièrement simple on peut choisir comme retardateur mécanique un moyen d'embrayage centrifuge monté sur l'arbre du moteur thermique n'entrainant la poulie d'une courroie de transmission du mouvement à l'alternateur que lorsque l'arbre du moteur thermique tourne à la vitesse de 600 tours par minute. Il est donc possible en utilisant un tel système de démarrer le moteur d'entrainement du véhicule en charge et de maintenir l'alimentation des moteurs asynchrones lors du ralenti du moteur thermique d'entrainement dès que les poulies de la courroie de transmission sont dimensionnées pour entrainer le démarrage de l'alternateur dans les conditions indiquées.

Selon une variante, le dispositif retardateur peut être un simple dispositif de commutation du circuit d'excitation de l'alternateur, le dispositif de commutation assurant la mise en excitation de l'alternateur que lorsque sa vitesse atteint une valeur suffisante pour fournir une tension de 120 volts avec une fréquence de 17 Hz. Connaissant le temps t( nécessaire pour qu'au démarrage du moteur thermique l'alternateur soit entrainé à la vitesse lui permettant de fournir 120 volts et 17 Hz on utilise un retardateur n'entrainant la commutation du circuit d'excitation qu'après l'écoulement du temps t. Cette variante englobe les divers types de retardateurs connus qui peuvent être mis en service manuellement ou automatiquement. On peut de même, lorsque les conditions l'exigent n'entrainer la commutation que lorsque l'alternateur ou le moteur thermique atteignent des vitesses bien déterminées, la vitesse prédéterminée de l'alternateur ou du moteur thermique entrainant automatiquement l'excitation de l'alternateur.

Un mode de réalisation de l'invention incluant ces variantes est décrit ci-après en référence au dessin annexé sur lequel :

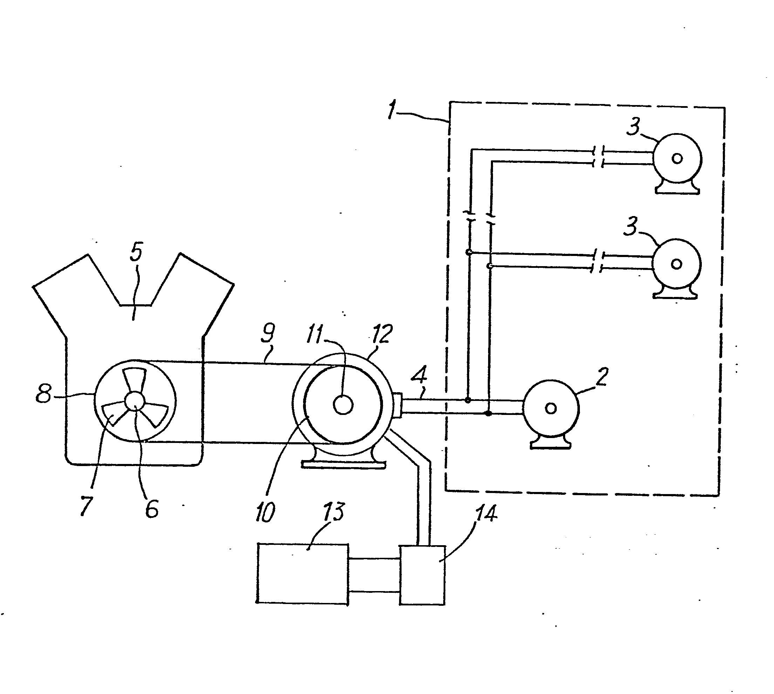

la figure 1 représente sous forme schématique une commande de moteursélectriquespar alternateur entrainé par moteur thermique.

L'équipement frigorifique à alimenter en courant pouvant être quelconque, cet équipement a été représenté schématiquement sous le forme d'un rectangle 1 contenant à titre d'exemple un moteur asynchrone 2 d'entrainement d'un compresseur et des moteurs asynchrones 3 de ventilateurs, non représentés. L'installation électrique pouvant être quelconque les fils d'alimentation électrique ont été schématisés en 4.

Le moteur thermique représenté schématiquement en 5 peut être par exemple un moteur Diesel tournant en régime normal entre 2000 et 2900 tours par minute. Sur son arbre 6 est monté un embrayage centrifuge schématisé en 7 entrainant, dès que la vitesse de l'arbre atteint 600 tours par minute, l'embrayage de la poulie de transmission 8.

La courroie 9 transmet le mouvement de rotation de la poulie 8 à la poulie 10 montée sur l'arbre 11 de l'alternateur 12. La dimension de la poulie 10 est choisie pour entrainer l'alternateur à plus grande vitesse de sorte qu'à une vitesse de rotation de l'arbre moteur 6 de 600 tours par minute, l'arbre 11 de l'alternateur 12 tourne dans l'exemple choisi à une vitesse de 1000 tours par minute. A cette vitesse l'alternateur 12 fournit une tension de 126 volts à une fréquence de 16,6 Hz de sorte que les moteurs asynchrones tels que 2 et 3 ne sont pas soumis à des intensités de démarrage élevées et peuvent sans aucun dommage être mis en service pendant les périodes de démarrage répétées du moteur 5 de commande du véhicule. En raison du rapport de transmission les moteurs asynchrones tels que 2 et 3 peuvent être utilisés au cours de fréquentes et longues périodes de ralenti du moteur thermique sans

risque d'échauffement prohibitif.

Il va de soi que le moteur Diesel peut être quelconque et être remplacé par tout autre moteur thermique. De même, le dispositif d'embrayage centrifuge 7 peut être remplacé par tout dispositif équivalent n'entraînant la poulie de transmission 8 qu'au dessus d'une vitesse minimum choisie à l'avance. Enfin bien que ce dispositif puisse être utilisé tel quel il est clair que l'on ne sortirait pas du cadre de l'invention en incluant tout dispositif auxiliaire adapté à l'installation frigorifique. Le dispositif peut être utilisé non seulement sur camion mais sur tout véhicule, voir même sur installation fixe, alternateur et moteurs asynchrones pouvant être des éléments standards.

On a reporté sur la même figure une source d'alimentation électrique 13 assurant l'excitation de l'alternateur 12 sous le contrôle du retardateur 14. Ce dispositif peut fonctionner en remplacement du retardateur mécanique que constitue l'embrayage centrifuge 7. Si l'on suppose que celui-ci met environ t secondes avant d'entraîner la poulie 8 on peut remplacer l'embrayage 7 par un embrayage permanent et utiliser pour le contrôle de la tension minimum choisie fournie par l'alternateur 12 que le retardateur 14 commutant la source 13 au circuit d'excitation de l'alternateur 12 qu'après le temps de t secondes. Les très nombreux circuits de retard et de commutation existants, à temps de retard réglables ou non, permettent d'incorporer très commodément de tels éléments dans le dispositif de commande du circuit d'excitation de l'alternateur 12.

Il est clair que l'on ne sortirait pas du cadre de l'invention en conjuguant le dispositif de transmission par embrayage centrifuge 7 commandé par la vitesse de rotation faible du moteur thermique à un dispositif retardateur, à temps retardé faible et agissant après entrainement de l'alternateur, ce temps étant suffisant pour obtenir une tension suffisante pour supporter la charge des moteurs asynchrones à vitesse relativement faible de l'alternateur.

On dispose ainsi d'un moyen commode susceptible d'être adapté aisément à des conditions de charges diverses et présentant en outre l'avantage d'être fiable et de faible prix de revient. Enfin lorsque l'on ne désire assurer le débit de l'alternateur que pour une vitesse bien déterminée de l'alternateur ou encore du moteur thermique on leur associe un compte tours de tout type:

0009848

électrique, ou magnétique par exemple contrôlant la commutation du circuit d'excitation, l'ensemble compte-tours - commutateurs jouant le rôle du retardateur 14.

1°) Dispositif de commande de moteurs électriques d'équipements frigorifiques par moteur thermique auxiliaire et notamment au moyen d'un moteur thermique d'entraînement d'un véhicule pourvu d'une installation frigorifique, en vue d'assurer l'énergie nécessaire à l'équipement frigorifique aussi bien au cours de la marche du véhicule qu'au cours de ses périodes d'arrêts prolongés, le moteur thermique tournant au ralenti, ainsi qu'au cours du démarrage en charge, la génératrice électrique entraînée par le moyen thermique étant un alternateur fournissant un courant alternatif, de fréquence et de tension variables, à l'ensemble des moteurs électriques de l'installation, constitués de moteurs asynchrones travaillant à puissance constante, le dispositif étant pourvu d'un moyen n'assurant le débit de l'alternateur que lors de l'obtention d'une vitesse suffisante dudit moteur thermique capable d'engendrer au démarrage en charge une fréquence et une tension suffisante pour limiter l'intensité et éliminer ainsi tout échauffement intempestif des moteurs asynchrones, ledit dispositif étant caractérisé en ce que ledit moyen assurant le débit de l'alternateur est un moyen retardateur constitué d'un dispositif d'embrayage centrifuge monté sur l'arbre du moteur thermique et entraînant une poulie de transmission par courroie commandant la rotation de l'alternateur dès que la vitesse du moteur thermique atteint une vitesse prédéterminée assurant à la sortie de l'alternateur une tension variable minimale limitant l'intensité du courant consommé par les moteurs asynchrones.

2°) Dispositif tel que revendiqué en 1 dont le moyen de transmission est choisi pour qu'au cours des vitesses de ralenti du moteur thermique la vitesse d'entraînement de l'alternateur soit encore suffisante pour que la tension variable de l'alternateur atteigne une valeur minimale limitant l'intensité du courant consommé par les moteurs asynchrones.

3°) Dispositif tel que revendiqué en 1 dont le moyen retardateur est un dispositif de commutation retardé commutant le circuit d'excitation de l'alternateur après un temps prédéterminé de l'entraînement de l'alternateur par le moteur thermique et suffisant pour assurer lors de la commutation une tension de sortie minimale limitant l'intensité du courant consommé par les moteurs asynchrones.

4°) Dispositif tel que revendiqué en 3 dont le temps de

0009848

retard est fourni par un dispositif compte tours de l'arbre du moteur.

5°) Dispositif tel que revendiqué en 3 dont le temps de retard est fourni par un dispositif compte tours de l'arbre de l'alternateur.

6°) Dispositif tel que revendiqué en 1 dont le dispositif retardateur comprend à la fois un dispositif d'embrayage centrifuge monté sur l'arbre du moteur thermique et un dispositif de commutation retardée du circuit d'excitation de l'alternateur fonctionnant lorsque l'embrayage centrifuge assure la rotation de l'alternateur.

Nombre de feuillets : Sept
Mots rayés ou ajoutés : Néant
Par procuration de la société anonyme dite : FRIGIKING FRANCE

Le mandataire

A.M. BLAIN

0009848

**RAPPORT DE RECHERCHE EUROPEENNE**

Office européen des brevets

Numéro de la demande

EP 79 20 0553

| | **DOCUMENTS CONSIDERES COMME PERTINENTS** | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 102 009 (OFFICINE D I CITTADELLA) <br> * Page 2, lignes 23-32 * <br> -- | 1 | B 60 H 3/04 <br> H 02 P 7/66 |
| | DE - A - 1 763 076 (INSTITUT FUR SCHIENENFAHRZEUGE) <br> * Page 2, lignes 22 - page 3, ligne 34 * <br> -- | 1 | |
| A | US - A - 3 720 842 (R.L. MARTIN et al. THERMOKING CORPORATION) <br> * Colonne 2, lignes 1-33 * <br> -- | 1 | **DOMAINES TECHNIQUES RECHERCHES (Int. Cl. 3)** <br><br> B 60 H 3/04 <br> B 60 P 3/20 <br> H 02 P 7/66 <br> H 02 P 1/16 |
| A | US - A - 2 895 096 (J.H. WALLACE-US ELECTRICAL MOTORS, INC.) <br> * Colonne 1, ligne 71 - colonne 2, ligne 24; figure * <br> -- | 1 | H 02 P 1/30 <br> B 60 L 11/02 - <br> B 60 L 11/14 |
| A | GB - A - 925 368 (STAL REFRIGERA-TION AKTIEBOLAG) <br> * Page 1, lignes 44-70; figure * <br> -- | 1 | |
| A | FR - A - 2 108 363 (BORG WARNER CORPORATION) <br> * Page 8, lignes 1-13 * <br> --- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-12-1979 | WEIHS |

OEB Form 1503.1   06.78